# EUROPÄISCHE PATENTSCHRIFT

(11) **EP 3 006 760 B1**
(45) Veröffentlichungstag und Bekanntmachung des Hinweises auf die Patenterteilung: **09.08.2017**
(21) Anmeldenummer: 15001656.6
(22) Anmeldetag: 03.06.2015
(51) Int. Cl.: F16D 3/50, F16D 1/033, F16D 1/076

(54) **REIBSCHLÜSSIGE VERBINDUNG UND VERFAHREN ZUR ERHÖHUNG DES ÜBER EINE REIBSCHLÜSSIGE VERBINDUNG ÜBERTRAGBAREN DREHMOMENTS UND/ODER QUERKRAFT**
FRICTION-TYPE CONNECTION AND METHOD FOR INCREASING THE TORQUE AND/OR LATERAL FORCE TRANSFERRED OVER A FRICTION-TYPE CONNECTION
LIAISON PAR FRICTION ET PROCÉDÉ D'AUGMENTATION DU COUPLE ET/OU DE LA FORCE TRANSVERSALE POUVANT ÊTRE TRANSMISE PAR UNE LIAISON PAR FRICTION

(30) Priorität: 27.09.2014 DE 102014014413
(43) Veröffentlichungstag der Anmeldung: 13.04.2016
(73) Patentinhaber: MAN Truck & Bus AG, 80995 München (DE)
(72) Erfinder: Burkhardt, Wolfgang, 91522 Ansbach (DE)
(74) Vertreter: v. Bezold & Partner Patentanwälte - PartG mbB

(56) Entgegenhaltungen:
- DE-A1-102005 031 332
- DE-U1- 8 625 580
- JP-A- 2011 088 227

## Beschreibung

Die Erfindung betrifft eine Vorrichtung zur reibschlüssigen drehmoment- und/oder Querkraft übertragenden Verbindung zweier Maschinenelemente. Die Erfindung betrifft ferner ein Verfahren zur Erhöhung des über eine reibschlüssige drehmoment- und/oder Querkraft übertragende Verbindung zweier Maschinenelemente übertragbaren Drehmoments und/oder der über die reibschlüssige Verbindung übertragbaren Querkraft.

Aus dem Stand der Technik sind verschiedene Verbindungen von Maschinenelementen bekannt, die die Aufgabe haben, ein Drehmoment oder eine Querkraftbelastung zu übertragen. Neben formschlüssigen Verbindungen finden im Maschinenbau häufig reibschlüssige Verbindungen Anwendung. Das übertragbare Torsionsmoment ist hierbei abhängig vom Durchmesser D der Reibfläche, deren Abstand von der Dreh- bzw. Torsionsachse sowie von der dort wirkenden Normalkraft F_{N} und dem Reibwert µ an dieser Stelle.

Aus der Praxis ist bekannt, dass sich bei bestehenden Konstruktionen erst nachträglich herausstellen kann, dass es Anwendungsszenarien für eine bestehende reibschlüssige Verbindung zur Übertragung eines Drehmoments oder einer Querkraftbelastung gibt, für die die bestehende Konstruktion nicht ausreichend ausgelegt ist. Hierbei ergibt sich das technische Problem, wie das über die reibschlüssige Verbindung übertragbare Drehmoment oder die Querkraftbelastung erhöht werden kann, wenn gleichzeitig keine Änderung des Durchmessers D der Reibfläche, der dort wirkenden Normalkraft F_{N} und dem Reibwert (Reibungskoeffizienten) µ möglich ist, da die bestehende Konstruktion nicht verändert werden soll.

Die technische Problemstellung wird nachfolgend am Beispiel zweier mittels Schrauben reibschlüssig verbundener Gehäuseteile eines Antriebstrangs eines Nutzfahrzeugs als hervorgehobene Anwendung der Erfindung erläutert.

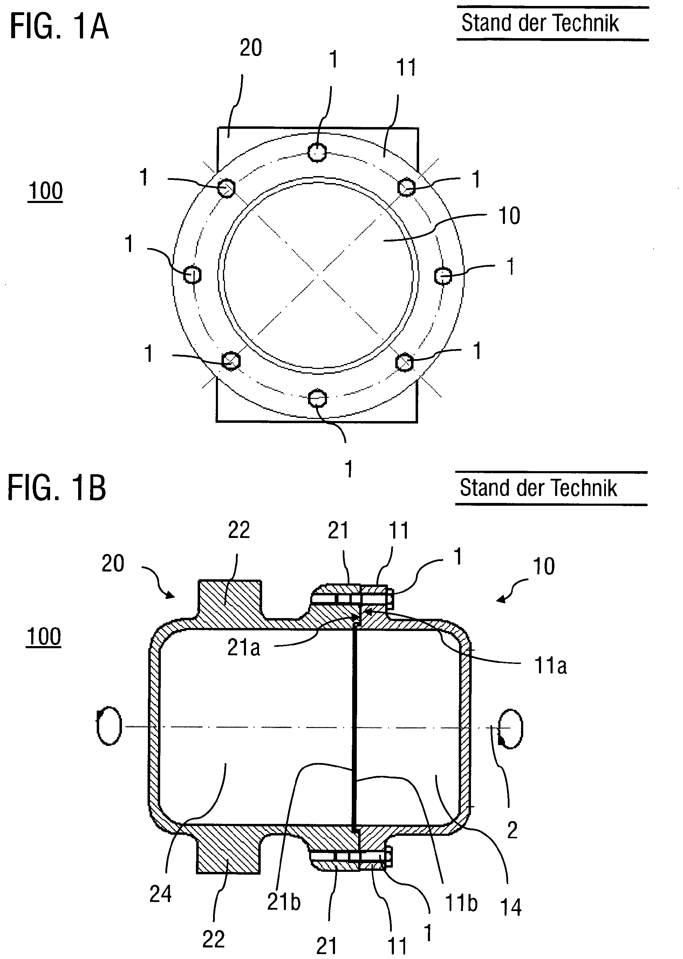

Die Figur 1A zeigt eine Vorderansicht einer Anordnung 100 aus einer Kupplungsglocke 10 als Teil einer frei schwingenden Getriebeeinheit, d. h. einer nur motorseitig abgestützten Getriebeeinheit, und einem Schwungradgehäuse 20 als Teil der Motoreinheit des Antriebstrangs eines Nutzfahrzeugs. Figur 1B zeigt die aus dem Stand der Technik bekannte Anordnung der Figur 1A in einem Längsschnitt.

Im Innenraum 14 der Kupplungsglocke 10 sind Getriebeteile und im Innenraum 24 des Schwungradgehäuses 20 ist das Schwungrad angeordnet, die jedoch jeweils zur Vereinfachung der Darstellung und zur Verdeutlichung der Problemstellung nicht dargestellt wurden. In der Darstellung der Figur 1B schließt sich links an das Schwungradgehäuse 20 die Motoreinheit (nicht dargestellt) an. Mit der gestrichelten Linie 2 ist die Mittelachse der Kurbelwelle 2 bezeichnet, die sich in der durch die Pfeile gekennzeichneten Richtung dreht.

Im vorliegenden Beispiel sind die beiden Gehäuseteile 10, 20 über acht Schrauben 1 miteinander verschraubt. Hierzu weist die Kupplungsglocke 10 im Verbindungsbereich einen Flanschbereich auf, der als ringförmig umlaufender Bund 11 ausgebildet ist. Das Schwungradgehäuse 20 weist einen hierzu korrespondierenden ringförmig umlaufenden Bund 21 auf. An sich gegenüberstehenden und als Reibflächen ausgebildeten Trennflächen 11a, 21 a der Kupplungsglocke 10 und des Schwungradgehäuses 20 werden diese Reibflächen 11 a, 21 a durch die von den Schrauben 1 erzeugte Vorspannkraft gegeneinander gepresst, so dass eine reibschlüssige Verbindung an den Trennflächen erzeugt wird.

Mit den Bezugszeichen 21b und 11 b sind die Gehäusewände bezeichnet, die im verbundenen Zustand der Kupplungsglocke 10 und des Schwungradgehäuses 20 gegenüberliegend sind, aber nicht direkt miteinander in Kontakt stehen.

Im Fahrzeugbetrieb ist die ganze Einheit aus Motor und Getriebe sehr hohen Torsionslasten ausgesetzt, insbesondere da Getriebeübersetzungen von 10:1 oder 15:1 üblich sind. Hierbei wird die frei schwingende Getriebeeinheit mit einem hohen Reaktionsmoment in Abhängigkeit von dem Produkt aus Motormoment und der jeweiligen Übersetzung belastet.

In der Praxis hat sich gezeigt, dass beispielsweise bei Baustellenfahrzeugen bei Vollgas und in vollbeladenem Zustand Spitzenmomente auftreten können, die dazu führen, dass das Getriebe gegenüber dem Motor aufgrund des entstehenden Torsionsmoments verrutscht bzw. dass die Schrauben 1 durch die hohe Torsionsbelastung beschädigt werden können.

Es wurde vorstehend bereits erwähnt, dass die über den Reibschluss an den Trennflächen 11 a und 21 a übertragbare Torsionsbelastung von dem Durchmesser D der Reibfläche, deren gemittelten Abstand von der Kurbelwelle 2, von der dort wirkenden Normalkraft F_{N} und dem Reibwert µ an den Reibflächen abhängt. Bei bestehenden, nicht mehr veränderbaren Konstruktionen ist an diesen Größen keine Änderung mehr möglich, so dass sich das technische Problem ergibt, wie dennoch die bestehende Vorrichtung 100 so verbessert werden kann, dass die reibschlüssige Verbindung der beiden Gehäuseteile 10, 20 höhere Torsionsbelastungen aushält.

Es ist somit eine Aufgabe der Erfindung, eine verbesserte Vorrichtung zur reibschlüssigen drehmoment- und/oder querkraftübertragenden Verbindung zweier Maschinenelemente bereitzustellen, mit der Nachteile herkömmlicher reibschlüssiger Verbindungen vermieden werden können. Die Aufgabe der Erfindung ist es insbesondere, eine bestehende Vorrichtung zur reibschlüssigen drehmoment- und/oder querkraftübertragenden Verbindung zweier Maschinenelemente so weiterzubilden, dass das mit der Vorrichtung übertragbare Querkraft oder Drehmoment erhöht werden kann. Es ist eine weitere Aufgabe der Erfindung, ein Verfahren zur Erhöhung des über eine reibschlüssige drehmoment- und/oder querkraftübertragende Verbindung zweier Maschinenelemente übertragbaren Drehmoments und/oder Querkraft bereitzustellen.

Diese Aufgaben werden durch eine Vorrichtung und ein Verfahren mit den Merkmalen der jeweiligen unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Die erfindungsgemäße Vorrichtung zur reibschlüssigen drehmoment- bzw. torsionsmoment- und/oder querkraftübertragenden Verbindung zweier Maschinenelemente weist ein erstes Maschinenelement und ein zweites Maschinenelement auf sowie wenigstens ein erstes Befestigungsmittel, mit dem eine Vorspannkraft erzeugbar ist, die sich gegenüberstehende und als Reibflächen ausgebildete Trennflächen des ersten Maschinenelements und des zweiten Maschinenelements zur Übertragung eines Drehmoments gegeneinander presst. Das wenigstens eine erste Befestigungsmittel kann ein lösbares Befestigungsmittel sein, beispielsweise eine Schraube.

Gemäß allgemeinen Gesichtspunkten der Erfindung weist die Vorrichtung ferner wenigstens ein Zusatzelement zur Steigerung des übertragbaren Drehmoments auf, das am ersten Maschinenelement und am zweiten Maschinenelement befestigt ist, wobei die Befestigung des wenigstens einen Zusatzelements am ersten Maschinenelement reibschlüssig unter Ausnutzung der Vorspannkraft des wenigstens einen ersten Befestigungsmittels erfolgt. Vorzugsweise ist das Zusatzelement in tangentialer Richtung zur Drehachse steif ausgeführt. Das Zusatzelement ist somit derart am ersten Maschinenelement befestigt, dass die reibschlüssige Verbindung des Zusatzelements am ersten Maschinenelement einen Teil der Drehmomentlast bzw. der Querkraftbelastung aufnimmt. Gemäß der vorliegenden Erfindung wirkt die Vorspannkraft, d. h. die Normalkraft, des wenigstens einen Befestigungsmittels somit nicht nur an den Trennflächen zwischen dem ersten Bauteil und dem zweiten Bauteil, sondern auch an der Kontaktfläche bzw. Reibfläche zwischen dem ersten Maschinenelement und dem wenigstens einen Zusatzelement.

Durch Einbringen eines oder mehrerer derartiger Zusatzelemente parallel zum Wirkungspfad der Torsionsbelastung kann die Vorspannkraft des wenigstens einen ersten Befestigungselements mehrfach genutzt und das übertragbare Torsionsmoment erhöht werden. Die Steigerung des übertragbaren Drehmoments ergibt sich dadurch, dass nun die Summation dieser zusätzlichen Reibkontakte überwunden werden muss, bis eine nicht gewünschte Verdrehung des ersten Maschinenelements gegenüber dem zweiten Maschinenelement erfolgt.

Ein besonderer Vorzug der Erfindung liegt somit darin, dass das über die reibschlüssige Verbindung zwischen dem ersten Maschinenelement und dem zweiten Maschinenelement übertragbare Drehmoment bzw. die Querkraftbelastung erhöht werden kann, ohne die reibschlüssige Verbindung zwischen dem ersten Maschinenelement und dem zweiten Maschinenelement selbst ändern zu müssen, d. h. bei gleichbleibendem Durchmesser D der Reibfläche zwischen ersten und zweitem Maschinenelement, bei gleichbleibender Normalkraft F_{N} und gleichbleibendem Reibwert (Reibungskoeffizienten) µ der Reibflächen.

Gemäß einer bevorzugten ersten Ausgestaltungsform ist das wenigstens eine Zusatzelement am zweiten Maschinenelement mittels wenigstens eines zweiten Befestigungsmittels reibschlüssig festgelegt, wobei die von dem wenigstens einen zweiten Befestigungsmittel erzeugbare Vorspannkraft im Wesentlichen senkrecht zu der von dem wenigstens einen ersten Befestigungsmittel erzeugbaren Vorspannkraft ist. Dies bietet den Vorteil, dass etwaige Toleranzen ausgeglichen werden können. Das zweite Befestigungsmittel kann als Schraube ausgeführt sein.

Gemäß dieser ersten Ausgestaltungsform kann das wenigstens eine Zusatzelement einen L-förmigen Querschnitt aufweisen. Hierbei dient der kurze Schenkel der Ausbildung einer reibschlüssigen Verbindung mit dem ersten Bauteil und der lange Schenkel zur Übergreifung der Trennflächen des ersten Maschinenelements und des zweiten Maschinenelements und zur Festlegung am zweiten Maschinenelement.

Ferner besteht im Rahmen der Erfindung die Möglichkeit, dass die sich gegenüberstehenden und als Reibflächen ausgebildeten Trennflächen des ersten Maschinenelements bzw. des zweiten Maschinenelements jeweils als Teil eines Flansches des ersten bzw. zweiten Bauteils ausgebildet sind.

Gemäß einer zweiten Ausgestaltungsform sind die sich gegenüberstehenden und als Reibflächen ausgebildeten Trennflächen des ersten Maschinenelements bzw. des zweiten Maschinenelements wiederum jeweils als Teil eines Flansches des ersten bzw. zweiten Bauteils ausgebildet. Gemäß der zweiten Ausgestaltungsform ist das wenigstens eine Zusatzelement formangepasst zu den Flanschen ausgebildet und umgreift diese zumindest in einem Teilbereich klammerförmig. Hierzu kann das Zusatzelement zur klammerförmigen Umgreifung des Flanschbereichs vorzugsweise einen U-förmigen Querschnitt aufweisen.

Gemäß der zweiten Ausgestaltungsform kann die Befestigung des Verbindungselements am zweiten Maschinenelement reibschlüssig unter Ausnutzung der Vorspannkraft des wenigstens einen ersten Befestigungsmittels erfolgen. Dies bedeutet, dass das Zusatzelement sowohl am ersten Maschinenelement als auch am zweiten Maschinenelement reibschlüssig unter Ausnutzung der Vorspannkraft des gleichen Befestigungsmittels angeordnet ist, die somit doppelt ausgenutzt wird.

Falls das wenigstens eine erste Befestigungsmittel als Schraube ausgeführt ist, kann hierzu ferner eine Mutter vorgesehen sein, oder das wenigstens eine Zusatzelement kann ein Muttergewinde aufweisen.

Bei einer vorteilhaften Variante dieser zweiten Ausgestaltungsform ist das wenigstens eine Zusatzelement in Richtung der Vorspannkraft biegeweich und in tangentialer Richtung zur Drehachse des zu übertragenden Drehmoments und/oder der Torsionsbelastung steif ausgeführt. Dadurch können Toleranzen in Richtung der Normalkraft der Schrauben bzw. in Richtung der Vorspannkraft ausgeglichen werden, wodurch das Anbringen des klammerförmigen Zusatzelements erleichtert wird und gleichzeitig sichergestellt werden kann, dass das Zusatzelement die auftretenden Torsionsbelastungen sicher aufnehmen kann.

Ferner besteht die Möglichkeit, dass die Flansche als ringförmig umlaufende Bünde ausgebildet sind.

Das Zusatzelement kann ein Blechteil sein. Blechteile können kostengünstig und flexibel in verschiedenen Formen hergestellt werden, um so das Zusatzelement an die bestehende Konstruktion anpassen zu können.

Vorstehend wurde bereits erwähnt, dass das erste Befestigungsmittel und das zweite Befestigungsmittel als Schraube ausgeführt sein können. Hierbei ist es vorteilhaft, wenn die Schrauben ein möglichst großes Klemmlängenverhältnis aufweisen. Dies ermöglicht eine stabile Ausführung der Schrauben gegenüber der Betriebsbelastung sowie gegenüber einem Setzen der Verschraubung, so dass die Übertragung des Drehmoments unter dem Schraubenkopf vernachlässigt werden kann. Hierbei ist zu erwähnen, dass bei sehr kurzen Schrauben mit einer Klemnilänge Iₖₗ von Iₖₗ<2d, wobei d der Schraubendurchmesser ist, der Kontakt zwischen Schraubenkopfauflage und Schraube auch als Reibschluss fungiert. Es ist daher vorteilhaft, die Klemmlänge so zu wählen, dass Iₖₗ>2d ist. Die Übertragung des Drehmoments unter dem Schraubenkopf kann dann vernachlässigt werden.

Ferner kann das Zusatzelement mehrere Durchgangsöffnungen aufweisen, die so angeordnet sind, dass sie jeweils fluchtend zu einer Durchgangsöffnung sind, die in den sich gegenüberstehenden und als Reibflächen ausgebildeten Trennflächen des ersten Maschinenelements und des zweiten Maschinenelements vorgesehen ist und zur reibschlüssigen Verbindung mittels der Schraube verwendet wird. Dies ermöglicht die einfache mehrfache Ausnutzung der Vorspannkraft der für die reibschlüssige Verbindung zwischen dem ersten Maschinenelement und dem zweiten Maschinenelement verwendeten Schrauben.

Ferner kann die reibschlüssige Befestigung des wenigstens einen Zusatzelements am ersten Maschinenelement an einer einem Schraubenkopf der Schraube zugewandten Seite des ersten Bauteils und einer dem zweiten Bauteil abgewandten Seite des ersten Bauteils erfolgen, wobei das wenigstens eine Zusatzelement durch den Schraubenkopf auf das erste Bauteil gepresst wird.

Wie bereits eingangs erwähnt, betrifft eine hervorgehobene Anwendung der Erfindung den Fall, dass das erste Maschinenelement als Gehäuseteil eines Getriebes, vorzugsweise als Kupplungsglocke, und das zweite Maschinenelement als Gehäuseteil eines Motors, vorzugsweise als Schwungradgehäuse eines Nutzfahrzeugs, ausgebildet ist. Dadurch können auch bestehende Motorgetriebe-Anbindungsstellen nachträglich noch für höhere Torsionsbelastungen ausgelegt werden, ohne die ursprüngliche Grundkonstruktion verändern zu müssen. Vorzugsweise handelt es sich bei dem Getriebe hierbei um ein frei schwingendes Getriebe.

Der Grundgedanke der Erfindung ist anwendbar sowohl auf ruhende Bauteile wie die vorgenannte Kupplungsglocke und das Schwungradgehäuse als auch auf rotierende Bauteile. Bei einer Variante der letztgenannten Ausführungsvariante wäre das erste Maschinenelement beispielsweise eine um eine Drehachse drehbare Abtriebseinrichtung zur Ableitung eines Drehmoments und das zweite Maschinenelement eine um eine Drehachse drehbare Antriebseinrichtung zur Einleitung eines Drehmoments.

Es wird betont, dass die vorliegende Erfindung jedoch nicht auf die hervorgehobene Anwendungen der Erfindung beschränkt ist, sondern allgemein auf reibschlüssige drehmoment- und/oder querkraftübertragende Verbindungen zweier Bauteile, insbesondere zweier Maschinenelemente, anwendbar ist, so dass anstatt der Begriffe erstes Maschinenelement bzw. zweites Maschinenelement auch erstes Bauteil bzw. zweites Bauteil im Sinne der Offenbarung dieses Dokuments verwendet werden können.

Bei einer vorteilhaften Variante der ersten Ausgestaltungsform, bei der das zweite Maschinenelement als Schwungradgehäuse ausgeführt ist, kann am Schwungradgehäuse ein Montageblock mit einer planen Auflagefläche angeformt sein. Bei Nutzfahrzeugen ist es üblich, am Schwungradgehäuse derartige Montageblöcke anzuformen, an denen das Gehäuseteil zur Montage des Motors aufgehängt wird. Danach kommt diesem Montageblock keine Funktion mehr zu.

Erfindungsgemäß kann jedoch dieser Montageblock vorteilhafterweise nach der Motormontage zur Befestigung des Zusatzelements genutzt werden, da dieser eine plane Auflagefläche aufweist und sich somit zur reibschlüssigen Anbindung des Zusatzelements am zweiten Maschinenelement eignet. Hierbei kann das Zusatzelement mit einem Endbereich auf der planen Auflagefläche aufliegen und im Auflagebereich am Montageblock festgelegt sein, beispielsweise mittels der zuvor genannten Verschraubung durch eine oder mehrere Schrauben, die eine Vorspannkraft erzeugen, die sowohl senkrecht zur Vorspannkraft ist, die an der Reibfläche zwischen dem ersten und dem zweiten Maschinenelement wirkt, als auch zur Vorspannkraft zur reibschlüssigen Anbindung des Zusatzelements am ersten Maschinenelement.

Eine besonders vorteilhafte Ausführungsvariante sieht vor, dass genau zwei Zusatzelemente vorgesehen sind. Diese sind vorzugsweise gegenüberliegend beispielsweise an einer Oberseite und einer Unterseite an der Anordnung aus dem ersten Maschinenelement und dem zweiten Maschinenelement befestigt. Dies ermöglicht eine vorteilhafte Kraftverteilung.

Die Erfindung betrifft ferner ein Kraftfahrzeug, vorzugsweise ein Nutzfahrzeug, mit einer Vorrichtung wie hierin offenbart.

Die Erfindung betrifft ferner ein Verfahren zur Erhöhung des über eine reibschlüssige drehmoment- und/oder querkraftübertragende Verbindung zweier Maschinenelemente übertragbaren Drehmoments und/oder Querkraft.

Hierbei umfasst die Verbindung ein erstes Maschinenelement, ein zweites Maschinenelement und wenigstens ein erstes Befestigungsmittel, mit dem eine Vorspannkraft erzeugbar ist, die sich gegenüberstehende und als Reibflächen ausgebildete Trennflächen des ersten Maschinenelements und des zweiten Maschinenelements zur Übertragung eines Drehmoments gegeneinander presst.

Das Verfahren ist dadurch gekennzeichnet, dass das übertragbare Drehmoment- und/oder Querkraft erhöht wird, indem wenigstens ein Zusatzelement am ersten Maschinenelement und am zweiten Maschinenelement befestigt wird, wobei die Befestigung des wenigstens einen Zusatzelements am ersten Maschinenelement reibschlüssig unter Ausnutzung der Vorspannkraft des wenigstens einen ersten Befestigungsmittels erfolgt. Das Verfahren beschreibt somit, wie bestehende Konstruktionen nachträglich zur Erhöhung des übertragbaren Drehmoments und/oder der Querkraftbelastung modifiziert werden können, ohne dass der Durchmesser D der Reibfläche, die dort wirkende Normalkraft F_{N} und der Reibwert µ an der reibschlüssigen Verbindungsstelle zwischen dem ersten Maschinenelement und dem zweiten Maschinenelement verändert werden müssen.

Zur Vermeidung von Wiederholungen sollen rein vorrichtungsgemäß offenbarte Merkmale auch als verfahrensgemäß offenbart gelten und beanspruchbar sein. Die vorgenannten Aspekte betreffen das Zusatzelement und dessen Anbindung an das erste Maschinenelement und/oder das zweite Maschinenelement und gelten somit auch für das Verfahren.

Weitere Einzelheiten und Vorteile der Erfindung werden im Folgenden unter Bezug auf die beigefügten Zeichnungen beschrieben. Es zeigen:
- Figur 1A: eine aus dem Stand der Technik bekannte reibschlüssige Verbindung eines Schwungradgehäuses mit einer Kupplungsglocke in einer Vorderansicht;
- Figur 1B: einen Längsschnitt der Anordnung aus Figur 1A;
- Figur 2A: eine Vorderansicht einer Vorrichtung gemäß einer ersten Ausgestaltungsform der Erfindung;
- Figur 2B: einen Längsschnitt der Vorrichtung aus Figur 2A;
- Figur 3A: eine Vorderansicht einer zweiten Ausgestaltungsform der Erfindung; und
- Figur 3B: einen Längsschnitt der Ausgestaltungsform der Figur 3A.

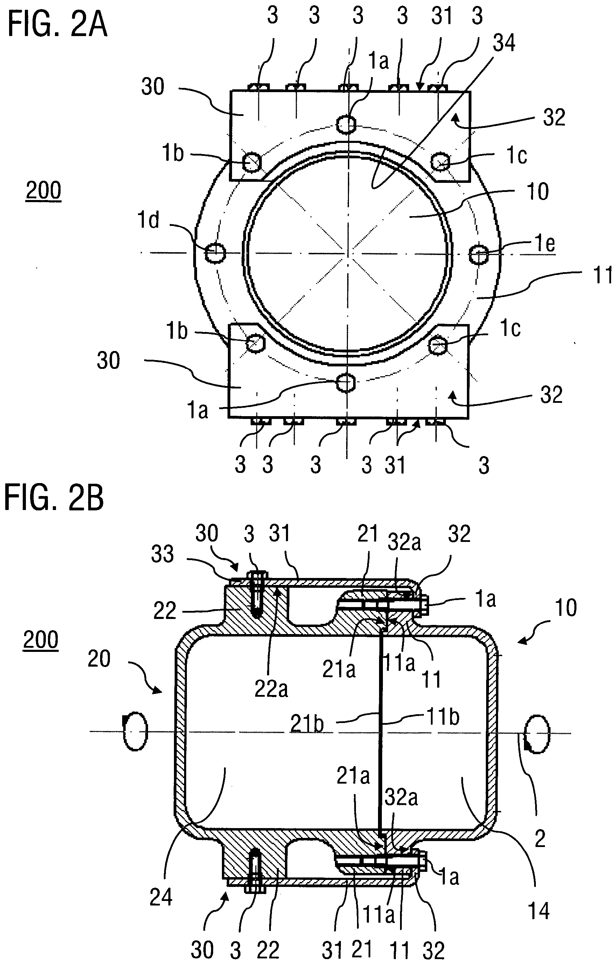

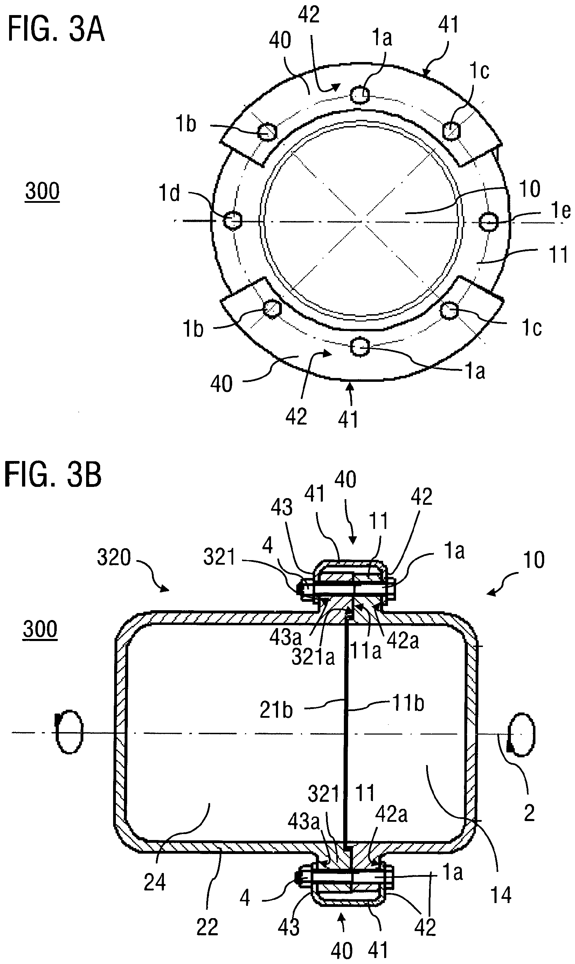

Gleiche oder funktional äquivalente Elemente sind in allen Figuren mit denselben Bezugszeichen bezeichnet, so dass die in der Zeichnung gezeigten verschiedenen Ansichten der Vorrichtung auch aus sich heraus verständlich sind. Insbesondere entsprechen Komponenten der Figuren 2A, 2B, 3A und 3B mit gleichen Bezugszeichen den Komponenten der Figuren 1A und 1B und werden nicht gesondert beschrieben. Die Schrauben 1a-1e entsprechen den Schrauben 1 der Figuren 1A und 1B.

Die Figuren 2A und 2B zeigen eine erste Ausgestaltungsform 200 der Erfindung.

Die Vorrichtung 200 unterscheidet sich von der in den Figuren 1A und 1B gezeigten Vorrichtung 100 im Wesentlichen dadurch, dass zwei baugleiche Zusatzelemente 30 in Form je eines Blechteils mit L-förmigem Querschnitt an der Kupplungsglocke 10 und am Schwungradgehäuse 20 befestigt sind. Hierbei ist das Blechteil 30 an der Kupplungsglocke 10 reibschlüssig unter Ausnutzung der Vorspannkraft der Schrauben 1 a, 1 b und 1 c befestigt. Das Blechteil 30 besteht dabei aus einem planen, rechteckförmigen ersten Abschnitt 31, der die reibschlüssige Verbindungsstelle an den ringförmig umlaufenden Bünden 11, 21 übergreift und am Schwungradgehäuse 20 befestigt wird, und einem daran angeformten Endabschnitt 32, der sich senkrecht hierzu nach unten erstreckt.

Der Endabschnitt 32 weist eine kreissegmentförmige Ausnehmung 34 auf, um die Form des Endabschnitts an den ringförmigen Bund 11 der Kupplungsglocke 10 anzupassen. Der Endabschnitt 32 weist ferner drei Durchgangsöffnungen auf, die so angeordnet sind, dass sie jeweils fluchtend zu einer in dem Bund 11 vorgesehenen Durchgangsöffnung sind, in die jeweils eine der Schrauben 1 a, 1 b und 1 c zur Ausbildung der reibschlüssigen Verbindung eingreift.

Durch Festziehen der Schrauben 1 a, 1b und 1 c wird somit der Endabschnitt 32 und damit das Blechteil 30 reibschlüssig gegen die den Schraubenköpfen der Schrauben 1 a, 1 b und 1 c zugewandte Seite des Bundes 11 der Kupplungsglocke 10 gepresst. Die hierbei reibschlüssig am Bund 11 der Kupplungsglocke 10 befestige Reibfläche des Zusatzelements 30 ist mit dem Bezugszeichen 32a bezeichnet.

Dadurch bildet sich an der Reibfläche 32a eine reibschlüssige Verbindung aus, so dass die Vorspannkraft der Schrauben 1 a, 1 b und 1 c jeweils doppelt ausgenutzt wird. Dadurch erhöht sich auch das übertragbare Torsionsmoment an der reibschlüssigen Verbindung 21a und 11 a zwischen der Kupplungsglocke 10 und dem Schwungradgehäuse 20, da zur Verdrehung der beiden Teile die Summation aller Reibkontakte überwunden werden muss.

Im vorliegenden Beispiel werden sechs der acht Schrauben zur Ausbildung einer zusätzlichen reibschlüssigen Verbindungsstelle mittels der Zusatzelemente 30 verwendet. Dadurch erhöht sich das übertragbare Drehmoment im Wesentlichen um 3/4 auf 1 3/4 des ursprünglichen Werts, unter der Annahme gleicher Reibwerte und gleicher Vorspannkraft der Schrauben im Vergleich zu dem Beispiel der Figuren 1A und 1B.

Wäre das Zusatzelement in einem alternativen (nicht dargestellten) Ausführungsbeispiel so ausgeführt, dass sich die Vorderseite 32 des oder der Zusatzelemente 30 über die gesamte Ringfläche des Bundes 11 erstrecken würde und mittels aller acht Schrauben daran reibschlüssig befestigt wäre, würde sich das übertragbare Torsionsmoment im Wesentlichen verdoppeln, wiederum unter der Annahme gleicher Reibwerte und bei gleicher Vorspannkraft der Schrauben im Vergleich zu dem Beispiel der Figuren 1A und 1B.

Zur Befestigung des Blechteils 30 an dem Kupplungsgehäuse 20 wird ausgenutzt, dass im vorliegenden Ausführungsbeispiel am Kupplungsgehäuse 20 bereits ein Montageblock 20 im hinteren Bereich angeformt ist, der sowohl an der Oberseite als auch an der Unterseite des Kupplungsgehäuses 20 vorgesehen ist und der nach oben und nach unten eine plane Auflagefläche ausbildet. Wie vorstehend bereits erwähnt, wird ein derartiger Montageblock 22 zur Aufhängung des Kupplungsgehäuses 20 während der Montage des Motors genutzt. Das Blechteil 30 wird mittels einer zusätzlichen Verschraubung durch die Schrauben 3 mit dem Montageblock verschraubt, wobei die Vorspannkraft durch die Schrauben 3 hier senkrecht zu der durch die Schrauben 1 erzeugten Vorspannkraft ist.

Die Figuren 3A und 3B zeigen eine zweite Ausgestaltungsform der Erfindung.

Die Vorrichtung 300 besteht wiederum aus einer reibschlüssigen Verbindung aus einem Schwungradgehäuse 320 mit einer Kupplungsglocke 10. Das Schwungradgehäuse 320 unterscheidet sich von dem Schwungradgehäuse 20 im Wesentlichen dadurch, dass keine Montageblöcke angeformt sind.

Die reibschlüssige Verbindung zwischen dem Kupplungsgehäuse 320 und der Kupplungsglocke 10 erfolgt wiederum über ringförmig umlaufende Bünde 321 und 11, an denen die beiden Bauteile 10, 320 zur Ausbildung einer reibschlüssigen Verbindung durch eine Verschraubung unter Verwendung der Schrauben 1a bis 1 e verschraubt sind.

Die Besonderheit dieser Ausgestaltungsform liegt darin, dass das die beiden baugleichen Zusatzelemente 40 jeweils einen U-förmigen Querschnitt aufweisen und in einem Teilkreisbereich die Bünde 321, 11e klammerförmig umgreifen.

Jedes der Zusatzelemente 40, die wiederum als Blechteile ausgeführt sind, wird unter Ausnutzungskraft der Vorspannkraft jeweils dreier Schrauben 1 a, 1 b, 1 c an den Bünden 321, 11 befestigt.

Die Vorspannkraft der Schrauben 1 a, 1 b, 1 c wird somit dreifach ausgenützt: zum einen zum Ausbilden einer reibschlüssigen Verbindung an den Trennflächen 321a, 11a und zum anderen zur Ausbildung einer reibschlüssigen Verbindung an der Kontaktfläche des seitlichen Abschnitts 42 des Zusatzelements 40 an dem Bund 11 der Kupplungsglocke und an der Kontaktfläche der gegenüberliegenden Seitenfläche des Zusatzelements 40 an dem Bund 321 des Schwungradgehäuses 320.

Hierzu ist zur Befestigung jedes der Zusatzelemente 40 jeweils eine zusätzliche Mutter 4 auf der Seite des Schwungradgehäuses 320 vorgesehen.

Zu einer Verdrehung aufgrund einer Torsionsbelastung der beiden Kontaktflächen 321a und 11a muss somit nicht nur die Reibungskraft zwischen diesen Kontaktflächen, sondern auch zusätzlich die Reibungskraft an den Kontaktflächen 42a und 43a überwunden werden, wodurch sich das übertragbare Torsionsmoment signifikant erhöhen lässt.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den durch die Patentansprüche bestimmten Schutzbereich fallen. Insbesondere beansprucht die Erfindung auch Schutz für den Gegenstand und die Merkmale der Unteransprüche.

### Bezugszeichenliste

- 1, 1a - 1e: Schraube
- 2: Mittelachse der Kurbelwelle
- 3: Schraube
- 4: Mutter
- 10: Kupplungsglocke
- 11: Bund
- 11a: Trennfläche, Reibfläche
- 11b: innere Trennfläche
- 14: Innenraum
- 20: Schwungradgehäuse
- 21: Bund
- 21a: Trennfläche, Reibfläche
- 21b: innere Trennfläche
- 22: Montageblock
- 24: Innenraum
- 30: Zusatzelement
- 31: Erster Abschnitt
- 32: Zweiter Abschnitt
- 32a: Trennfläche, Reibfläche
- 33: Befestigungsbereich
- 40: Zusatzelement
- 41: Mittelabschnitt
- 42, 43: Seitenabschnitt
- 100: Anordnung aus dem Stand der Technik
- 200: Erste Ausgestaltungsform
- 300: Zweite Ausgestaltungsform
- 320: Schwungradgehäuse
- 321: Bund
- 321a: Trennfläche, Reibfläche

## Patentansprüche

1. Vorrichtung (200; 300) zur reibschlüssigen drehmoment- und/oder querkraftübertragenden Verbindung zweier Maschinenelemente, umfassend
ein erstes Maschinenelement (10);
ein zweites Maschinenelement (20); und
wenigstens ein erstes Befestigungsmittel (1 a, 1 b, 1 c), mit dem eine Vorspannkraft erzeugbar ist, die sich gegenüberstehende und als Reibflächen ausgebildete Trennflächen (11 a, 21 a; 321a) des ersten Maschinenelements (10) und des zweiten Maschinenelements (20) zur Übertragung eines Drehmoments gegeneinander presst; **gekennzeichnet durch**
wenigstens ein Zusatzelement (30; 40), das am ersten Maschinenelement (10) und am zweiten Maschinenelement (20; 320) befestigt ist, wobei die Befestigung des wenigstens einen Zusatzelements (30; 40) am ersten Maschinenelement (10) reibschlüssig unter Ausnutzung der Vorspannkraft des wenigstens einen ersten Befestigungsmittels (1 a, 1 b, 1 c) erfolgt.

2. Vorrichtung (200) nach Anspruch 1, **dadurch gekennzeichnet,**
(a) **dass** das wenigstens eine Zusatzelement (30) am zweiten Maschinenelement (20) mittels wenigstens einen zweiten Befestigungsmittels (3) reibschlüssig festgelegt ist, wobei die von dem wenigstens einen zweiten Befestigungsmittel (3) erzeugbare Vorspannkraft im Wesentlichen senkrecht zu der von dem wenigstens einen ersten Befestigungsmittel (1a, 1b, 1c) erzeugbaren Vorspannkraft ist; und/oder
(b) **dass** das wenigstens eine Zusatzelement (30) einen L-förmigen Querschnitt aufweist.

3. Vorrichtung (300) nach Anspruch 1, **dadurch gekennzeichnet,**
(a) **dass** die sich gegenüberstehenden und als Reibflächen ausgebildeten Trennflächen (11 a, 21 a) des ersten Maschinenelements (10) und des zweiten Maschinenelements (320) jeweils Teil eines Flansches des ersten (10) bzw. zweiten (320) Maschinenelements sind; und
(b) **dass** das wenigstens eine Zusatzelement (40) formangepasst zu den Flanschen ausgebildet ist und diese zumindest in einem Teilbereich klammerförmig umgreift; und
(c) **dass** die Befestigung des Verbindungselements (40) am zweiten Maschinenelement (320) reibschlüssig unter Ausnutzung der Vorspannkraft des wenigstens einen ersten Befestigungsmittels (1 a, 1 b, 1 c) erfolgt, wobei ferner eine Mutter (4) vorgesehen ist oder wobei das wenigstens eine Zusatzelement (40) ein Muttergewinde aufweist.

4. Vorrichtung (300) nach Anspruch 3, **dadurch gekennzeichnet,**
(a) **dass** das wenigstens eine Zusatzelement (40) in Richtung der Vorspannkraft biegeweich und in tangentialer Richtung zur Drehachse (2) des zu übertragenen Drehmoments und/oder der Querkraftbelastung steif ausgeführt ist; und/oder
(b) **dass** die Flansche als ringförmige umlaufende Bünde ausgebildet sind.

5. Vorrichtung (200; 300) nach einem der vorhergehenden Ansprüche, **dadurch gekennzeichnet, dass** das Zusatzelement (30; 40) ein Blechteil ist.

6. Vorrichtung (200; 300) nach einem der vorhergehenden Ansprüche, **dadurch gekennzeichnet, dass** das erste Befestigungsmittel (1 a, 1 b, 1 c) eine Schraube ist.

7. Vorrichtung (200; 300) nach Anspruch 6, **dadurch gekennzeichnet, dass** das wenigstens eine Zusatzelement (30; 40) mehrere Durchgangsöffnungen aufweist, die so angeordnet sind, dass sie jeweils fluchtend zur einer Durchgangsöffnung sind, die in an den sich gegenüberstehenden und als Reibflächen ausgebildete Trennflächen (11a, 21 a) des ersten Maschinenelements (10) und des zweiten Maschinenelements (20; 320) vorgesehen ist und zur reibschlüssigen Verbindung mittels der Schraube (1 a, 1 b, 1 c) verwendet wird.

8. Vorrichtung (200; 300) nach Anspruch 6 oder 7, **dadurch gekennzeichnet, dass** die reibschlüssige Befestigung des wenigstens einen Zusatzelements (30; 40) am ersten Maschinenelement (10) an einer einem Schraubenkopf der Schraube (1 a, 1 b, 1 c) zugewandten Seite des ersten Maschinenelements und einer dem zweiten Maschinenelement abgewandten Seite des ersten Maschinenelements erfolgt, wobei das wenigstens eine Zusatzelement (30; 40) durch den Schraubenkopf auf das erste Maschinenelement (10) gepresst wird.

9. Vorrichtung nach einem der vorhergehenden Ansprüche, **dadurch gekennzeichnet, dass** das erste Maschinenelement (10) als Gehäuseteil eines Motors, vorzugsweise als Kupplungsglocke, und das zweite Maschinenelement (20) als Gehäuseteils eines Getriebes, vorzugsweise als Schwungradgehäuse, eines Nutzfahrzeugs ausgebildet sind.

10. Vorrichtung (200) nach Anspruch 9, wenn abhängig von Anspruch 2, **dadurch gekennzeichnet, dass** am Schwungradgehäuse ein Montageblock (22) mit einer planen Auflagefläche (22a) angeformt ist, wobei das Zusatzelement (30) mit einem Endbereich (33) auf der planen Auflagefläche (22a) aufliegt und im Auflagebereich am Montageblock (22) festgelegt ist.

11. Vorrichtung (200; 300) nach einem der vorhergehenden Ansprüche, **dadurch gekennzeichnet, dass** genau zwei Zusatzelemente (30; 40) vorgesehen sind.

12. Kraftfahrzeug, vorzugsweise Nutzfahrzeug, mit einer Vorrichtung (200; 300) nach einem der Ansprüche 1 bis 11.

13. Verfahren zur Erhöhung des über eine reibschlüssige drehmoment- und/oder torsionsmomentübertragende Verbindung zweier Maschinenelemente übertragbaren Drehmoments und/oder Querkraft, wobei die Verbindung umfasst: ein erstes Maschinenelement (10); ein zweites Maschinenelement (20; 320); und wenigstens ein erstes Befestigungsmittel (1a, 1b, 1c), mit dem eine Vorspannkraft erzeugbar ist, die sich gegenüberstehende und als Reibflächen ausgebildete Trennflächen (11 a, 21 a; 321 a) des ersten Maschinenelements (10) und des zweiten Maschinenelements (20; 320) zur Übertragung eines Drehmoments gegeneinander presst;
**dadurch gekennzeichnet, dass**
das übertragbare Drehmoment und/oder die übertragbare Querkraft dadurch erhöht wird, dass wenigstens ein Zusatzelement (30; 40) am ersten Maschinenelement (10) und am zweiten Maschinenelement (20; 320) befestigt wird, wobei die Befestigung des wenigstens einen Zusatzelements (30; 40) am ersten Maschinenelement (10) reibschlüssig unter Ausnutzung der Vorspannkraft des wenigstens einen ersten Befestigungsmittels (1 a, 1 b, 1 c) erfolgt.

## Claims

1. A device (200; 300) for the frictional torque- and/or transverse-force-transmitting connection of two machine elements, comprising
a first machine element (10);
a second machine element (20); and
at least one first fastening means (1a, 1b, 1c), by means of which a preloading force can be produced, which presses mutually opposite parting surfaces (11a, 21a; 321a), designed as friction surfaces, of the first machine element (10) and of the second machine element (20) against one another in order to transmit a torque; **characterized by**
at least one additional element (30; 40), which is fastened on the first machine element (10) and on the second machine element (20; 320), wherein the fastening of the at least one additional element (30; 40) on the first machine element (10) is accomplished by frictional engagement using the preloading force of the at least one first fastening means (1a, 1b, 1c).

2. The device (200) according to Claim 1, **characterized**
(a) **in that** the at least one additional element (30) is fixed frictionally on the second machine element (20) by means of at least one second fastening means (3), wherein the preloading force that can be produced by the at least one second fastening means (3) is substantially perpendicular to the preloading force which can be produced by the at least one first fastening means (1a, 1b, 1c), and/or
(b) **in that** the at least one additional element (30) has an L-shaped cross section.

3. The device (300) according to Claim 1, **characterized**
(a) **in that** the mutually opposite parting surfaces (11a, 21a), designed as friction surfaces, of the first machine element (10) and of the second machine element (320) are part of a flange of the first (10) and of the second (320) machine element, respectively; and
(b) **in that** the at least one additional element (40) is matched in shape to the flanges and fits around said flanges in the form of a clip, at least in a partial region; and
(c) **in that** the fastening of the connecting element (40) on the second machine element (320) is accomplished by frictional engagement using the preloading force of the at least one first fastening means (1a, 1b, 1c), wherein furthermore a nut (4) is provided or wherein the at least one additional element (40) has a nut thread.

4. The device (300) according to Claim 3, **characterized**
(a) **in that** the at least one additional element (40) is embodied so as to be flexible in the direction of the preloading force and stiff in a tangential direction relative to the axis of rotation (2) of the torque to be transmitted and/or of the transverse force loading; and/or
(b) **in that** the flanges are designed as annular encircling collars.

5. The device (200; 300) according to one of the preceding claims, **characterized in that** the additional element (30; 40) is a sheet-metal part.

6. The device (200; 300) according to one of the preceding claims, **characterized in that** the first fastening means (1a, 1b, 1c) is a screw.

7. The device (200; 300) according to Claim 6, **characterized in that** the at least one additional element (30; 40) has a plurality of through openings, which are arranged in such a way that they are each in alignment with one through opening, which is provided in the mutually opposite parting surfaces (11a, 21a), designed as friction surfaces, of the first machine element (10) and of the second machine element (20; 320) and is used for frictional connection by means of the screw (1a, 1b, 1c).

8. The device (200; 300) according to Claim 6 or 7, **characterized in that** the frictional fastening of the at least one additional element (30; 40) on the first machine element (10) takes place on a side of the first machine element facing a screw head of the screw (1a, 1b, 1c) and on a side of the first machine element facing away from the second machine element, wherein the at least one additional element (30; 40) is pressed onto the first machine element (10) by the screw head.

9. The device according to one of the preceding claims, **characterized in that** the first machine element (10) is designed as a housing part of an engine, preferably as a clutch bell, and the second machine element (20) is designed as a housing part of a transmission, preferably as a flywheel housing, of a commercial vehicle.

10. The device (200) according to Claim 9, when dependent on Claim 2, **characterized in that** a mounting block (22) having a flat bearing surface (22a) is formed on the flywheel housing, wherein the additional element (30) rests by means of an end region (33) on the flat bearing surface (22a) and is fixed on the mounting block (22) in the bearing region.

11. The device (200; 300) according to one of the preceding claims, **characterized in that** precisely two additional elements (30; 40) are provided.

12. A motor vehicle, preferably a commercial vehicle, having a device (200; 300) according to one of Claims 1 to 11.

13. A method for increasing the torque and/or transverse force which can be transmitted via a frictional torque- and/or torsional-moment-transmitting connection between two machine elements, wherein the connection comprises: a first machine element (10); a second machine element (20; 320); and at least one first fastening means (1a, 1b, 1c), by means of which a preloading force can be produced, which presses mutually opposite parting surfaces (11a, 21a; 321a), designed as friction surfaces, of the first machine element (10) and of the second machine element (20; 320) against one another in order to transmit a torque; **characterized in that**
the transmissible torque and/or the transmissible transverse force is increased by fastening at least one additional element (30; 40) on the first machine element (10) and on the second machine element (20; 320), wherein the fastening of the at least one additional element (30; 40) on the first machine element (10) is accomplished by frictional engagement using the preloading force of the at least one first fastening means (1a, 1b, 1c).

## Revendications

1. Dispositif (200; 300) pour la liaison par friction de deux éléments de machine pour transmettre un couple ou une force transversale, comprenant:
un premier élément de machine (10);
un deuxième élément de machine (20); et
au moins un moyen de fixation (1a, 1b, 1c) avec lequel on peut produire une force de précontrainte, qui presse l'une contre l'autre des faces de séparation (11a, 21a; 321a) opposées et formant des faces de friction du premier élément de machine (10) et du deuxième élément de machine (20) pour la transmission d'un couple;
**caractérisé par** au moins un élément supplémentaire (30; 40), qui est fixé au premier élément de machine (10) et au deuxième élément de machine (20; 320), dans lequel la fixation dudit au moins un élément supplémentaire (30; 40) au premier élément de machine (10) est effectuée par friction en utilisant la force de précontrainte dudit au moins un premier moyen de fixation (1a, 1b, 1c).

2. Dispositif (200) selon la revendication 1, **caractérisé en ce que**
(a) ledit au moins un élément supplémentaire (30) est fixé par friction au deuxième élément de machine (20) au moyen d'au moins un deuxième moyen de fixation (3), dans lequel la force de précontrainte pouvant être produite par ledit au moins un deuxième moyen de fixation (3) est essentiellement perpendiculaire à la force de précontrainte pouvant être produite par ledit au moins un premier moyen de fixation (1a, 1b, 1c); et/ou
(b) ledit au moins un élément supplémentaire (30) présente une section transversale en forme de L.

3. Dispositif (300) selon la revendication 1, **caractérisé en ce que**:
(a) les faces de séparation (11a, 21a) opposées et formant des faces de friction du premier élément de machine (10) et du deuxième élément de machine (320) font respectivement partie d'une bride du premier (10) ou du deuxième (320) élément de machine; et
(b) ledit au moins un élément supplémentaire (40) est réalisé avec une forme adaptée aux brides et entoure celles-ci en forme d'attache au moins dans une région partielle; et
(c) la fixation de l'élément de liaison (40) au deuxième élément de machine (320) est effectuée par friction en utilisant la force de précontrainte dudit au moins un premier moyen de fixation (1a, 1b, 1c), dans lequel il est en outre prévu un écrou (4) ou dans lequel ledit au moins un élément supplémentaire (40) présente un filet d'écrou.

4. Dispositif (300) selon la revendication 3, **caractérisé en ce que**
(a) ledit au moins un élément supplémentaire (40) est souple en flexion dans la direction de la force de précontrainte et est rigide en direction tangentielle à l'axe de rotation (2) du couple à transmettre et/ou de la charge de force transversale à transmettre; et/ou
(b) les brides sont réalisées en forme de bourrelets périphériques annulaires.

5. Dispositif (200; 300) selon l'une quelconque des revendications précédentes, **caractérisé en ce que** l'élément supplémentaire (30; 40) est une pièce en tôle.

6. Dispositif (200; 300) selon l'une quelconque des revendications précédentes, **caractérisé en ce que** le premier moyen de fixation (1a, 1b, 1c) est une vis.

7. Dispositif (200; 300) selon la revendication 6, **caractérisé en ce que** ledit au moins un élément supplémentaire (30; 40) présente plusieurs ouvertures de passage, qui sont disposées de telle manière qu'elles soient respectivement en alignement avec une ouverture de passage, qui est prévue dans des faces de séparation (11a, 21a) opposées et formant des faces de friction du premier élément de machine (10) et du deuxième élément de machine (20; 320) et qui est utilisée pour la liaison par friction au moyen de la vis (1a, 1b, 1c).

8. Dispositif (200; 300) selon la revendication 6 ou 7, **caractérisé en ce que** la fixation par friction dudit au moins un élément supplémentaire (30; 40) au premier élément de machine (10) est effectuée sur un côté du premier élément de machine tourné vers une tête de vis de la vis (1a, 1b, 1c) et sur un côté du premier élément de machine situé à l'opposé du deuxième élément de machine, dans lequel ledit au moins un élément supplémentaire (30; 40) est pressé sur le premier élément de machine (10) par la tête de vis.

9. Dispositif selon l'une quelconque des revendications précédentes, **caractérisé en ce que** le premier élément de machine (10) est formé comme une partie de boîtier d'un moteur, de préférence comme une cloche d'accouplement, et le deuxième élément de machine (20) est formé comme une pièce de boîtier d'une transmission, de préférence comme boîtier de volant, d'un véhicule utilitaire.

10. Dispositif (200) selon la revendication 9, lorsqu'elle dépend de la revendication 2, **caractérisé en ce qu'**un bloc de montage (22) avec une face d'appui plane (22a) est formé sur le boîtier de volant, dans lequel l'élément supplémentaire (30) repose par une région d'extrémité (33) sur la face d'appui plane (22a) et est fixé au bloc de montage (22) dans la région d'appui.

11. Dispositif (200; 300) selon l'une quelconque des revendications précédentes, **caractérisé en ce qu'**il est prévu exactement deux éléments supplémentaires (30; 40).

12. Véhicule automobile, de préférence véhicule utilitaire, équipé d'un dispositif (200; 300) selon l'une quelconque des revendications 1 à 11.

13. Procédé d'augmentation du couple et/ou de la force transversale transmissible par une liaison par friction de deux éléments de machine pour la transmission d'un couple de rotation et/ou d'un couple de torsion, dans lequel la liaison comprend: un premier élément de machine (10); un deuxième élément de machine (20; 320); et au moins un premier moyen de fixation (1a, 1b, 1c), avec lequel on peut produire une force de précontrainte, qui presse l'une contre l'autre des faces de séparation (11a, 21a; 321a) opposées et formant des faces de friction du premier élément de machine (10) et du deuxième élément de machine (20; 320) pour la transmission d'un couple;
**caractérisé en ce que** l'on augmente le couple transmissible et/ou la force transversale transmissible en ce que l'on fixe au moins un élément supplémentaire (30; 40) au premier élément de machine (10) et au deuxième élément de machine (20; 320), dans lequel on effectue la fixation dudit au moins un élément supplémentaire (30; 40) au premier élément de machine (10) par friction en utilisant la force de précontrainte dudit au moins un premier moyen de fixation (1a, 1b, 1c).
